# EUROPÄISCHE PATENTANMELDUNG

(11) **EP 0 633 091 A1**
(43) Veröffentlichungstag der Anmeldung: **11.01.1995**
(21) Anmeldenummer: 94108847.8
(22) Anmeldetag: 09.06.1994
(51) Int. Cl.: B23K 9/20

(54) **Vorrichtung zum Kontaktschweissen von Schweissbolzen**

(30) Priorität: 08.07.1993 DE 4322831
(71) Anmelder: OBO Bettermann OHG, D-58710 Menden (DE)
(72) Erfinder: Gauger, Wolfgang, Dipl.-Ing., D-58710 Menden (DE)
(74) Vertreter: Köchling, Conrad-Joachim

(57) **Zusammenfassung**

Um eine Vorrichtung zum Kontaktschweißen von Schweißbolzen mit einem Gehäuse mit einer Zuführeinrichtung zum Zuführen der Bolzen zum Schweißkopf mit Spannzange der Vorrichtung, wobei die Spannzange samt eingesetztem Befestigungsmittel entgegen der Kraft einer Spannfeder zurückschiebbar ist bis zu einer Position, in welcher die Zündspitze des Befestigungsmittels in der Flucht eines an der Gerätemündung angeordneten Positionier-mittels liegt zu schaffen, bei der die durch die Spannfeder zu beschleunigende Masse erheblich verringert wird, wird vorgeschlagen, daß das einen ersten Kanal (3) bildende Teil aus einem ersten gehäusefest gehaltenen (9) und einem zweiten, das Spannmittel (4) umfassenden gegen die Federkraft der Spannfeder (7) verschieblichen Teil (10) besteht, welches jenseits der Einmündung (11) eines zweiten Kanals (5) beginnt, in dem ein Bolzenzuführstößel geführt ist.

## Beschreibung

Die Erfindung betrifft eine Vorrichtung zum Kontaktschweißen von Schweißbolzen oder dergleichen länglichen Befestigungsmitteln mit einem Gehäuse mit einer Zuführeinrichtung zum Zuführen der Befestigungsmittel zum Schweißkopf der Vorrichtung, wobei die Zuführeinrichtung einen ersten, annähernd geradlinig verlaufenden Kanal aufweist, an dessen einem Ende die Befestigungsmittel vereinzelt zugeführt werden und an dessen anderem Ende eine Spannzange oder dergleichen Spannmittel für das zugeführte Befestigungsmittel angeordnet ist, ferner die Zuführeinrichtung einen zweiten Kanal aufweist, in dem ein Stößel längsverschiebbar geführt ist, durch den ein im ersten Kanal befindliches Befestigungsmittel in die Spannzange oder das Spannmittel einschiebbar ist,
wobei zudem ein über das spannmittelseitige Ende des ersten Kanals vorragendes Positioniermittel an der Vorrichtung ausgebildet ist und das Spannmittel samt eingesetzten Befestigungsmittel entgegen der Kraft einer Spannfeder zurückschiebbar ist bis zu einer Position, in welcher die Zündspitze des Befestigungsmittels in der Flucht des Positioniermittels liegt.

Zum Stand der Technik wird auf die DE 37 39 944 C1 verwiesen, aus der eine Zuführvorrichtung ähnlicher Art bekannt ist.

Bei vorliegender Erfindung ist eine solche Zuführeinrichtung oder auch andere ähnliche Zuführeinrichtungen verwendbar.

Es sind im Stand der Technik Vorrichtungen zum Kontaktschweißen von Schweißbolzen bekannt, wobei es sich sowohl um stationäre Schweißroboter als auch um pistolenartige Handgeräte handelt. Bei den heute üblichen Kontaktschweißgeräten erfolgt die Handhabung in der Weise, daß nach dem ordnungsgemäßen Zuführen und Positionieren des Schweißbolzens dieser mit der Vorrichtung dem entsprechenden Bauteil zugeführt wird, an welches der Schweißbolzen angeschweißt werden soll. Zunächst trifft dabei die Zündspitze des Schweißbolzens auf das Werkstück und mit zunehmendem Gerätevorschub auf das Werkstück hin wird der Schweißbolzen samt Zündspitze und samt der ihn haltenden Klemmittel gegen die Kraft der Spannfeder zurückgedrückt, bis die Zündspitze des Schweißbolzens in der Flucht des Positionierungsmittels liegt. Das Positionierungsmittel ist üblicherweise als an die Mündung des Gerätes angesetzte Hülse ausgebildet. Die Vorrichtung wird dann in der Weise aktiviert, daß der Schweißstrom freigegeben wird, woraufhin die Zündspitze des Schweißbolzens abschmilzt und der Schweißbolzen samt der ihn halternden Klemmittel durch die Kraft der Spannfeder an das Werkstück angelegt wird. Nach Beendigung des Schweißvorganges wird das Gerät von der Schweißstelle abgehoben, wobei der Bolzen, der am Schweißstück angeschweißt ist, aus dem Spannmittel herausgezogen wird. Es ist dann die erneute Zuführung eines Schweißbolzens möglich. Der Arbeitsvorgang kann dann erneut ablaufen.

Bei der Ausbildung gemäß Stand der Technik ist es erforderlich, daß durch die Spannfeder die gesamten Bolzenzuführelemente, die sich innerhalb des Gerätes befinden beim Abschmelzen der Zündspitze des Schweißbolzens in Richtung auf das Werkstück bewegt werden müssen. Durch die erhebliche Masse der durch die Feder beschleunigten Geräteteile ist die Beschleunigung beim Verschieben des Schweißbolzens zum Werkstück hin nach dem Verdampfen der Zündspitze relativ gering, was als nachteilig angesehen wird.

Hiervon ausgehend liegt der Erfindung die Aufgabe zugrunde, eine Vorrichtung gattungsgemäßer Art zu schaffen, bei der die durch die Spannfeder zu beschleunigende Masse erheblich verringert wird.

Zur Lösung dieser Aufgabe wird vorgeschlagen, daß das den ersten Kanal bildende Teil aus einem ersten gehäusefest gehaltenen und einem zweiten, das Spannmittel umfassenden gegen die Federkraft der Spannfeder verschieblichen Teil besteht, welches jenseits der Einmündung des zweiten Kanales beginnt.

Durch diese Anordnung ist es nun nicht mehr nötig, mittels der Spannfeder die gesamte innerhalb des Gerätes befindliche Zuführeinheit zu verschieben, sondern durch die Spannfeder wird lediglich noch das zweite verschiebliche Teil des ersten Kanales verschoben, welches auch die Spannmittel aufweist. Die mittels der Spannfeder zu beschleunigende Masse ist damit erheblich gegenüber dem Stand der Technik verringert, so daß weit höhrere Ablaufgeschwindigkeiten erreichbar sind, was für den Schweißvorgang und den erforderlichen Zeitablauf vorteilhaft ist.

Eine bevorzugte Weiterbildung wird darin gesehen, daß in dem Gehäuse eine erste
Führungshülse angeordnet oder
oder ausgebildet ist, die von einer zweiten Führungshülse durchsetzt ist, die das Endteil des gehäusefest gehaltenen ersten Teils des ersten Kanals geführt umgibt, daß die zweite Führungshülse an ihrem dem Spannmittel abgewandten, aus der ersten Hülse herausragenden Ende einen Flansch aufweist, der von dem zweiten, gehäusefesten Teil des ersten Kanales durchgriffen ist und auf diesem geführt ist, daß zwischen dem Flansch und einer gehäuseseitigen Schulter am dem Spannmittel abgewandten Gehäuseende die Spannfeder eingespannt ist und daß in das dem Flansch abgewandte Ende der zweiten Führungshülse ein Kanalstück lösbar eingefügt ist, welches am freien Ende das Spannmittel trägt.

Die erste Führungshülse kann dabei Bestandteil des Gehäuses sein oder aber sie kann als selbständiges Element in dem Gehäuse befestigt, insbesondere angeschraubt sein. Die zweite Führungshülse ist in der ersten Führungshülse verschieblich angeordnet, wobei der Verschiebeweg durch Begrenzungsanschläge oder Vorspünge radial außen auf der zweiten Führungshülse eingegrenzt werden kann. Die zweite Führungshülse ist auch relativ auf dem Endteil des gehäusefest gehaltenen ersten Teils des ersten Kanales verschieblich geführt. Zwischen dem an der zweiten Hülse befestigten Flansch und einer gehäuseseitigen Schulter, die auch in eine axial gerichtete Kammer übergehen kann, ist die Spannfeder eingespannt. Bei Betätigung der Vorrichtung ist mittels der Spannfeder lediglich die zweite Führungshülse und das daran befestigte Kanalstück zu beschleunigen, welches am freien Ende das Spannmittel und den darin befindlichen Schweißbolzen oder dergleichen trägt. Die Befestigung des Kanalstückes an der Mündung der zweiten Führungshülse kann durch eine Klemmverbindung oder eine Schraubverbindung erfolgen. Hierdurch ist dieses Kanalstück leicht auswechselbar, sofern es nämlich durch den Schweißvorgang im Bereich des Spannmittels verunreinigt oder beschädigt ist.

Eine weiterhin bevorzugte Ausbildung wird darin gesehen, daß die Wandung des vorderen Endes des gehäusefest gehaltenen ersten Teils des ersten Kanals verjüngt ist und das hintere Ende des in die zweite Führungshülse eingefügten Kanalstückes hinsichtlich der Wandung ebenfalls verjüngt ist, wobei die Verjüngungen vorzugsweise geringe Überdeckung aufweisen und einander zu einem vollen Wandungsquerschnitt ergänzen.

Hierdurch ist es trotz der verschieblichen Anordnung der Teile zueinander möglich, einen nahezu unterbrechungsfreien Führungskanal für den zugeführten Schweißbolzen oder dergleichen Auszubilden, wobei an der Überdeckungsstelle durch die Verjüngungen nur ein geringer Spalt gebildet ist, der aber in Vorschubrichtung des Schweißbolzens innerhalb des Kanales angeschrägte Führungsflächen in den Übergangsbereichen aufweist, so daß ein Verhaken oder dergleichen des durchgeführten Bolzens vermieden ist. Beim axialen Verschieben des verschieblichen Kanalstückes samt Klemmittel entgegen der Kraft der Spannfeder können die Verjüngungsbereiche ineinander geschoben werden, bis sie praktisch einen vollen Wandungsquerschnitt bilden. Diese Position entspricht der Maximal-verschiebungslage des verschieblichen Kanalstückes in Richtung auf die am hinteren Gehäuseende befindliche Spannfeder.

Die Spannfeder ist üblicherweise als Schraubendruckfeder ausgebildet.

Um die Vorspannung der Spannfeder einstellen zu können, ist vorzugsweise vorgesehen, daß die gehäuseseitige Schulter, an der sich die Spannfeder abstützt, in Längsrichtung in Richtung auf den Flansch verstellbar ist.

Hierzu kann ein von außen betätigbarer Spannring vorgesehen sein, mittels dessen der Flansch in axialer Längsrichtung des Gerätes verstellt werden kann, welcher die Spannfeder stützt.

Weiterhin ist bevorzugt vorgesehen, daß zwischen dem Flansch und der Stirnfläche von erster und zweiter Führungshülse ein Stromzuführungsstück eingespannt ist.

Eine bevorzugte Ausführungsform wird darin gesehen, daß das Gehäuse einen quer zu seiner Längserstreckung abragenden Handgriff aufweist.

An sich sind derartige pistolenartige Geräte im Stand der Technik bekannt.

Die Erfindung ist nachstehend anhand eines schematisierten Ausführungsbeispieles erläutert.

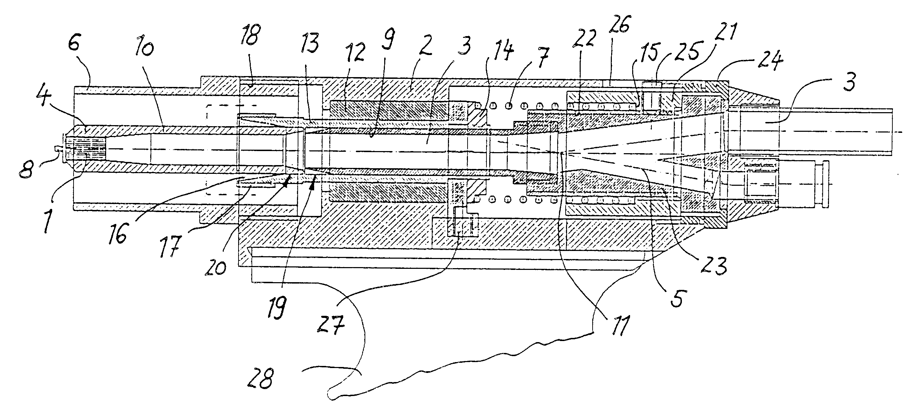

Die einzige Zeichnungsfigur zeigt eine erfindungsgemäße Vorrichtung im Mittellängsschnitt.

Die Vorrichtung zum Kontaktschweißen von Schweißbolzen 1 oder ähnlichen länglichen Befestigungsmitteln weist ein Gehäuse 2 auf, in dem eine Zuführeinrichtung zum Zuführen der Schweißbolzen angeordnet ist. Die Zuführeinrichtung weist einen ersten annähernd geradlinig verlaufenden Kanal 3 auf, an dessen einem Ende (in der Zeichnung rechts) die Schweißbolzen oder dergleichen vereinzelt zugeführt werden und an dessen anderem Ende (in der Zeichnung links) eine Spannzange 4 oder ein ähnliches Spannmittel für das zugeführte Befestigungselement angeordnet ist. Die Zuführeinrichtung weist zudem einen zweiten Kanal 5 auf, in den ein flexibler Stößel beispielsweise der Art, wie er in der DE 37 93 944 C1 beschrieben ist, längsverschiebbar geführt ist. Durch diesen (in der Zeichnung nicht gezeigten) Stößel kann ein im ersten Kanal 3 im vorderen Bereich befindlicher Schweißbolzen oder dergleichen in die Spannzange 4 mechanisch eingeschoben werden. Ferner ist ein über das spannmittelseitige Ende des ersten Kanales 3 vorragendes Positioniermittel 6 in Form einer rohrförmigen Hülse starr mit dem Vorrichtungsgehäuse verbunden. Das Spannmittel 4 kann samt eingesetztem Schweißbolzen 1 entgegen der Kraft einer Spannfeder 7 aus der in der Zeichnung dargestellten Position zurückgeschoben werden bis zu einer Position, in welcher die Zündspitze 8 des Schweißbolzens 1 in der Flucht der Mündung des Positioniermittels 6 liegt.

Erfindungsgemäß ist das den ersten Kanal 3 bildende Teil aus einem ersten gehäusefest gehaltenen Teil 9 und einem zweiten das Spannmittel 4 umfassenden, gegen die Federkraft der Spannfeder 7 in der Zeichnung nach rechts veschieblichen Teil 10 gebildet. Dieses Teil 10 beginnt in jedem Falle jenseits der Mündung 11 des zweiten Kanales 5 in den ersten Kanal 3.

Im Gehäuse 2 ist eine erste Führungshülse 12 angeordnet und befestigt, die von einer zweiten Führungshülse 13 durchsetzt ist. Die zweite Führungshülse 13 ist in der ersten Führungshülse 12 längsverschieblich. Die zweite Führungshülse 13 umgibt das Endteil des gehäusefest gehaltenen ersten Teils 9 des ersten Kanales 3 führend. Die Führungshülse ist also auch auf diesem Teil 9 längsverschieblich geführt und angeordnet. Die zweite Führungshülse 13 weist an ihrem dem Spannmittel 4 abgewandten, aus der ersten Hülse 12 herausragenden Ende einen Flansch 14 auf, der von dem zweiten, gehäusefesten Teil 9 des ersten Kanals 3 durchgriffen ist und auf diesem geführt ist. Zwischen dem Flansch 14 und einer gehäuseseitigen Schulter 15 am dem Spannmittel 4 abgewandten Ende des Gehäuses 2 ist die Spannfeder 7 eingespannt. In das dem Flansch 14 abgewandte Ende der zweiten Führungshülse 13 ist das Kanalstück 10 lösbar eingefügt, welches am freien Ende das Spannmittel 4 trägt. Zum lösbaren Einfügen und Befestigen ist ein Spannkonus 16 mit Spannverschraubung 17 vorgesehen. Auf diese Weise ist das Teilstück 10 samt Spannmittel 4 leicht lösbar an der Gehäusemündung gehaltert. Ebenso ist das Positioniermittel 6 über eine Gewindeverbindung 18 mit dem Gehäuse 2 verbunden, so daß auch diese Positionierhilfe leicht entfernt werden kann. Die Wandung des vorderen Endes des gehäusefest gehaltenen ersten Teils 9 des ersten Kanals 3 ist bei 19 verjüngt, wobei die Innenkontur des Teiles 9 zylindrisch ist und die Verjüngung nur außenseitig an der Mündung vorgesehen ist.

Das hintere Ende des in die zweite Führungshülse 13 eingefügten Kanalstückes 10 ist an der Wandung ebenfalls verjüngt bei 20, wobei dieses Teil außen zylindrisch und innenseitig verjüngt ist. Durch die Verjüngungsschräge wird beim Durchschieben des Schweißbolzens 1 eine Führungshilfe gebildet, die trotz der Durchmessererweiterungen in diesem Bereich ein Verkanten des Schweißbolzens 1 verhindert. Aus dem gleichen Grunde weisen beide Verjüngungen 19,20 eine geringe Überdeckung auf. Bei verschobenem Teil 10 in Richtung auf das Teil 9 greifen die Verjüngungen 19, 20 ineinander und ergänzen einander zu einem vollen Wandungsquerschnitt.

Die gehäuseseitige Schulter 15, an der sich die Spannfeder 17 abstützt, ist in Längsrichtung in Richtung auf den Flansch 14 verstellbar. Hierzu ist das Teil 21, welches die Schulter 15 bildet über Gewinde 22 mit einem inneren Teil 23 verbunden, wobei das innere Teil 23 mittels eines Stellringes 24 drehbar ist. Das Mitdrehen des äußeren Teiles 21 wird durch einen in einem Längsschlitz geführten Stift 25 verhindert, so daß bei Drehung des Stellringes 24 das die Schulter 15 umfassende Teil 21 entsprechend der Drehrichtung nach links oder rechts verstellt werden kann. Eine Begrenzung der Verstellung erfolgt durch die Randkanten des Längsschlitzes 26.

Zusätzlich ist zwischen dem Flansch 14 und der Stirnfläche von erster und zweiter Führungshülse 12, 13 ein Stromzuführungsstück 27 eingspannt, welches auch radial kontaktgebend mit dem Ende der zweiten Führungshülse 13 verbunden ist. Zumindest diese Kontaktstelle sowie die zweite Führungshülse 13 und der vordere Teil 10 des Kanales 3 sind aus elektrisch gutleitendem Material.

Das Gehäuse 2 weist zusätzlich einen quer zu seiner Längserstreckung abragenden Handgriff 28 auf, der in der Zeichnung nur schematisiert dargestellt ist. Zum Anschweißen eines Schweißbolzens 1 mittels der dargestellten Vorrichtung wird der Schweißbolzen 1 zunächst über den Kanal 3 zugeführt (beispielsweise mittels Druckluft) wobei der Bolzen dann in einem Bereich zwischen der Kreuzungsstelle 11 und dem Spannmittel liegt. Durch einen flexiblen Stößel, der durch den zweiten Kanal 5 eingeführt wird, kann der Schweißbolzen 1 dann in die Sollposition überführt werden, die in der Zeichnung gezeigt ist. Anschließend wird die Vorrichtung dem entsprechenden Werkstück angenähert, bis die Zundspitze 8 des Schweißbolzens an diesem Werkstück anliegt. Bei weiterem Vorschub des Gerätes in Richtung auf die Schweißstelle wird der Schweißbolzen 1 samt Spannmittel 4 sowie die zweite Führungshülse 13 samt Flansch 14 entgegen der Kraft der Spannfeder 7 aus der Position gemäß Zeichnungsfigur in eine nach rechts verschobene Position überführt, in welcher die Zündspitze 8 des Schweißbolzens 1 in der Flucht liegt, die von der Mündung des Positioniermittels 6 aufgespannt ist. Der Schweißstrom wird dann freigegeben, wodurch die Zündspitze 8 abschmilzt bzw. verdampft. Mittels der Kraft der Spannfeder 7 werden dann die Teile 14, 13, 10 , 4 und der Schweißbolzen 1 in Richtung auf die Schweißstelle vorgeschoben und der Schweißvorgang wird durch Anschweißen des Bolzens beendet. Anschließend kann die Vorrichtung vom Schweißbolzen 1 abgezogen werden. Durch die erfindungsgemäße und im Ausführungsbeispiel verdeutlichte Ausführung ist die Masse der mittels der Spannfeder 7 zu bewegenden Teile relativ gering, so daß hohe Beschleunigungen durch die Spannfeder 7 erreicht werden können, was für den Schweißablauf und den Schweißvorgang selbst vorteilhaft ist.

## Patentansprüche

1. Vorrichtung zum Kontaktschweißen von Schweißbolzen oder dergleichen länglichen Befestigungsmitteln mit einem Gehäuse mit einer Zuführeinrichtung zum Zuführen der Befestigungsmittel zum Schweißkopf der Vorrichtung, wobei die Zuführeinrichtung einen ersten, annähernd geradlinig verlaufenden Kanal aufweist, an dessen einem Ende die Befestigungsmittel vereinzelt zugeführt werden und an dessen anderem Ende eine Spannzange oder dergleichen Spannmittel für das zugeführte Befestigungsmittel angeordnet ist, ferner die Zuführeinrichtung einen zweiten Kanal aufweist, in dem ein Stößel längsverschiebbar geführt ist, durch den ein im ersten Kanal befindliches Befestigungsmittel in die Spannzange oder das Spannmittel einschiebbar ist, wobei zudem ein über das Spannmittel seitige Ende des ersten Kanals vorragendes Positioniermittel an der Vorrichtung ausgebildet ist und das Spannmittel samt eingesetztem Befestigungsmittel entgegen der Kraft einer Spannfeder zurückschiebbar ist bis zu einer Position, in welcher die Zündspitze des Befestigungsmittels in der Flucht des Positioniermittels liegt, **dadurch gekennzeichnet, daß** das den ersten Kanal (3) bildende Teil aus einem ersten gehäusefest gehaltenen (9) und einem zweiten, das Spannmittel (4) umfassenden gegen die Federkraft der Spannfeder (7) verschieblichen Teil (10) besteht, welches jenseits der Einmündung (11) des zweiten Kanals (5) beginnt.

2. Vorrichtung nach Anspruch 1, **dadurch gekennzeichnet, daß** in dem Gehäuse (2) eine erste Führungshülse (12) angeordnet oder ausgebildet ist, die von einer zweiten Führungshülse (13) durchsetzt ist, die das Endteil des gehäusefest gehaltenen ersten Teils (9) des ersten Kanals (3) geführt umgibt, daß die zweite Führungshülse (13) an ihrem dem Spannmittel (4) abgewandten, aus der ersten Hülse (12) herausragenden Ende einen Flansch (14) aufweist, der von dem zweiten, gehäusefesten Teil (9) des ersten Kanales (3) durchgriffen ist und auf diesem geführt ist, daß zwischen dem Flansch (14) und einer gehäuseseitigen Schulter (15) am dem Spannmittel (4) abgewandten Gehäuseende die Spannfeder (7) eingespannt ist, und daß in das dem Flansch (14) abgewandte Ende der zweiten Führungshülse (13) ein Kanalstück (10) lösbar eingefügt ist, welches am freien Ende das Spannmittel (4) trägt.

3. Vorrichtung nach Anspruch 2, **dadurch gekennzeichnet, daß** die Wandung des vorderen Endes des gehäusefest gehaltenen ersten Teils (9) des ersten Kanals (3) verjüngt ist (bei 19) und das hintere Ende des in die zweite Führungshülse (13) eingefügten Kanalstückes (10) hinsichtlich der Wandung ebenfalls verjüngt (bei 20) ist, wobei die Verjüngungen (19, 20) vorzugsweise geringe Überdeckung aufweisen und einander zu einem vollen Wandungsquerschnitt ergänzen.

4. Vorrichtung nach Anspruch 2 oder 3, **dadurch gekennzeichnet, daß** die gehäuseseitige Schulter (15), an der sich die Spannfeder (7) abstützt, in Längsrichtung in Richtung auf den Flansch (14) verstellbar ist.

5. Vorrichtung nach einem der Anspruch 2 bis 4, **dadurch gekennzeichnet, daß** zwischen dem Flansch (14) und der Stirnfläche von erster und zweiter Führungshülse (12,13) ein Stromzuführungsstück (27) eingespannt ist.

6. Vorrichtung nach einem der Anspruch 2 bis 5, **dadurch gekennzeichnet, daß** das Gehäuse (2) einen quer zu seiner Längserstreckung abragenden Handgriff (28) aufweist.
